# EUROPÄISCHE PATENTANMELDUNG

(11) **EP 0 824 106 A2**
(43) Veröffentlichungstag der Anmeldung: **18.02.1998**
(21) Anmeldenummer: 97113613.0
(22) Anmeldetag: 07.08.1997
(51) Int. Cl.: C08B 15/00, C08B 16/00, C08L 1/02

(54) **Cellulosepartikel**

(30) Priorität: 12.08.1996 AT 1449/96
(71) Anmelder: LENZING AKTIENGESELLSCHAFT, 4860 Lenzing (AT)
(72) Erfinder: Kurz, Friedrich, 4800 Attnang-Puchheim (AT); Schlangen, Jörg, 4840 Vöcklabruck (AT); Mayer, Johann, 4873 Frankenburg (AT)

(57) **Zusammenfassung**

Die Erfindung betrifft ein Verfahren zur Herstellung von kationische und/oder anionische Gruppen aufweisenden Cellulosepartikeln, enthaltend die Schritte:
- Versetzen und Vermischen einer Viskose mit einem kationischen und/oder anionischen Polymer
- Ausfällen der Viskose in einem oder mehreren wäßrigen Fäll- bzw. Regenerationsbädern
- Auswaschen der ausgefällten, regenerierten, kationische und/oder anionische Gruppen aufweisenden Cellulosepartikel.

Das erfindungsgemäße Verfahren ist dadurch gekennzeichnet, daß das Vermischen der Viskose mit dem kationischen und/oder anionischen Polymer unter Einbringung einer Mischenergie von 4 kJ/kg bis 20 kJ/kg Gemisch, vorzugsweise von 8 kJ/kg bis 12 kJ/kg Gemisch durchgeführt wird. Bevorzugt wird die Mischenergie gleichmäßig in das Gemisch eingebracht. Die Erfindung betrifft auch die Verwendung einer Mischvorrichtung (3) zur Durchführung des erfindungsgemäßen Verfahrens.

## Beschreibung

Die Erfindung betrifft ein Verfahren zur Herstellung von kationische und/oder anionische Gruppen aufweisenden Cellulosepartikeln gemäß dem Oberbegriff des Anspruches 1 sowie die Verwendung einer Mischvorrichtung zur Durchführung des Verfahrens.

Es ist bekannt, kationische bzw. anionische Gruppen aufweisende Cellulosepartikel dadurch herzustellen, daß man Lösungen der Cellulose oder von Derivaten der Cellulose, insbesondere alkalischen Lösungen des Cellulosexanthogenates (Viskose) kationische oder anionische Polymere zusetzt und aus der Lösung mittels bekannter Verfahren das Cellulosexanthogenat ausfallt und die Cellulose regeneriert. Solcherart hergestellte, kationische oder anionische bzw. auch gemischt kationisch-anionische Gruppen aufweisende Cellulosepartikel sind z.B. in den JP-A 2-274738, JP-A 52-26561, JP-A 3-54234 und JP-A 61-258801 beschrieben.

Es ist bekannt, daß solche Cellulosepartikel, insbesondere kationische Cellulosepartikel in Faserform eine verbesserte Anfärbbarkeit in bezug auf Säurefarbstoffe aufweisen. Weiters ist z.B. aus der JP-A 3-54234 bekannt, daß sich solcherart hergestellte Cellulosepartikel als Ionenaustauscher, zum Entfernen von Metallen aus Lösungen sowie als Flockungsmittel eignen.

In der PCT-WO 96/26220 wird beschrieben, daß durch die Zugabe eines Kationisierungsmittel zur Viskose Cellulosepartikel geschaffen werden, die über ihren gesamten Querschnittt verteilt an die Cellulose gebundene kationische Gruppen enthalten. Es wird weiters beschrieben, daß sich die Kationizität solcher Partikel bei einer Mahlung erhöht.

Die Herstellung der Mischungen aus Lösungen der Cellulose oder von Derivaten der Cellulose mit den kationischen oder anionischen Polymeren erfolgt z. B. gemäß JP-A 2-274738 durch Beimengen und gutem Mischen. Gemäß der JP-A 61-258801 wird empfohlen, das Polymer unmittelbar vor dem Verspinnen der Viskose beizugeben, da die Viskosität der Viskose steigt und die Erstarrung beschleunigt wird.

Zur Erzielung von kationische und/oder anionische Gruppen aufweisenden Cellulosepartikeln mit möglichst gleichmäßigen Eigenschaften ist es notwendig, den Zusatz der kationischen und/oder anionischen Polymere so durchzuführen, daß eine homogene Mischung aus Lösungen der Cellulose oder von Derivaten der Cellulose mit den kationischen oder anionischen Polymeren (Viskose/Polymer-Mischung) erhalten wird.

Es hat sich gezeigt, daß es beim Mischvorgang, insbesondere wenn die Viskose einen hohen Anteil an kationischem oder anionischem Polymer (20 Gew.% bis 50 Gew.% bezogen auf Cellulose) enthält, schwierig ist, solche homogenen Mischungen zu erhalten und insbesondere einen extrem hohen Viskositätsanstieg der Mischung zu vermeiden, welcher die Weiterverarbeitung zu den erfindungsgemäßen Cellulosepartikeln erschwert bzw. sogar unmöglich macht.

Aufgabe der vorliegenden Erfindung ist es demgemäß, ein Verfahren zur Herstellung von kationische und/oder anionische Gruppen aufweisenden Cellulosepartikeln mit einem möglichst gleichmäßigen Eigenschaftsspektrum zur Verfügung zu stellen, bei welchem beim Versetzen der Viskose mit dem kationischen und/oder anionischen Polymer eine möglichst homogene und nicht zu viskose Mischung erhalten wird, welche zu den kationische und/oder anionische Gruppen aufweisenden Cellulosepartikeln weiterverarbeitet werden kann.

Diese Aufgabe wird durch ein Verfahren zur Herstellung von kationische und/oder anionische Gruppen aufweisenden Cellulosepartikeln, enthaltend die Schritte:
- Versetzen und Vermischen einer Viskose mit einem kationischen und/oder anionischen Polymer
- Ausfällen der Viskose in einem oder mehreren wäßrigen Fäll- bzw. Regenerationsbädern
- Auswaschen der ausgefällten, regenerierten, kationische und/oder anionische Gruppen aufweisenden Cellulosepartikel,
gelöst, welches dadurch gekennzeichnet ist, daß das Vermischen der Viskose mit dem kationischen und/oder anionischen Polymer unter Einbringung einer Mischenergie von 4 kJ/kg bis 20 kJ/kg Gemisch, vorzugsweise von 8 kJ/kg bis 12 kJ/kg Gemisch durchgeführt wird.

Es hat sich gezeigt, daß sich eine homogene Mischung, die zur Verarbeitung zu den kationische und/oder anionische Gruppen aufweisenden Cellulosepartikeln geeignet ist, dadurch herstellen läßt, daß in die Mischung eine Mischenergie von 4 kJ/kg bis 20 kJ/kg Gemisch eingebracht wird.

Beim Eintrag von Mischenergien von unter 4 kJ/kg Gemisch läßt sich keine homogene Mischung erzielen und es bilden sich Inhomogenitäten, welche sich nur schwer weiterverarbeiten lassen.

Beim Eintrag von Mischenergien über 20 kJ/kg Gemisch andererseits wird offensichtlich der Überschuß an Energie in Wärme umgewandelt, die zu einer starken Viskositätserhöhung in der Mischung führt. Es wird vermutet, daß durch die Temperaturerhöhung chemische Reaktionen bzw. physikalische Abläufe bewirkt werden, die diesen Viskositätsanstieg bewirken. Dieser Viskositätsanstieg ist irreversibel. Durch die hohe Viskosität kann die Mischung nicht mehr zu den erfindungsgemäßen Cellulosepartikeln weiterverarbeitet werden. Der Temperaturanstieg beim Mischen darf 5 °C nicht überschreiten.

Eine Viskoselösung weist beispielsweise eine Viskosität von ca. 7 Pa.s auf. In einem Versuch, bei dem der Druckverlust beim Transport der Viskose durch eine Rohrleitung festgestellt wurde, wurde ein Druckverlust von reiner Viskose von 3 - 4 bar festgestellt.

Viskose/Polymer-Mischungen, welche mit einem Energieeintrag außerhalb des erfindungsgemäßen Bereiches hergestellt wurden, waren nicht homogen vermischt oder es wurde ein Druckverlust in derselben Versuchsanordnung von bis zu 20 bar festgestellt. Diese Mischungen ließen sich nicht mehr weiterverarbeiten.

Eine Viskose/Polymer-Mischung, die sich gut zu den erfindungsgemäßen Cellulosepartikeln weiterverarbeiten läßt, ist homogen und weist in derselben Versuchsanordnung einen Druckverlust von 10 bar auf Nur derartige Mischungen lassen sich zu geeigneten Cellulosepartikeln weiterverarbeiten.

Eine bevorzugte Ausführungsform des erfindungsgemäßen Verfahrens besteht darin, daß die Mischenergie gleichmäßig in die Mischung eingebracht wird.

Herkömmliche Misch-und Rührverfahren für hochviskose Systeme bewirken hohe Scherkräfte im System. Derartige Verfahren führen aber nicht zu homogenen Mischungen. Ein Großteil der eingebrachten Mischenergie bewirkt eine starke Scherung der Mischkomponenten und führt zu einer übermäßigen Temperaturerhöhung im Scheibereich und dadurch zu einem hohen, irreversiblen Viskositätsanstieg in diesem Scherbereich. Diese hochviskosen Bereiche vermischen sich kaum mehr mit dem Rest der Mischkomponenten. Dadurch entstehen Inhomogenitäten in der Mischung. Derartige Mischungen weisen wie zuvor beschrieben einen hohen Druckabfall aufund sind nicht mehr zu den gewünschten Cellulosepartikeln mit gleichmäßigen Eigenschaften weiterverarbeitbar.

Es ist daher wichtig, daß beim Mischvorgang ein punktuelles Auftreten von hohen Scherkräften vermieden wird.

Die gleichmäßige Einbringung der Mischenergie kann bevorzugt auch dadurch erfolgen, daß die Mischkomponenten in mehreren Teilströmen miteinander vermischt werden.

Mischverfahren, die eine gleichmäßige Einbringung der Mischenergie in die Mischung bewirken, arbeiten z. B. nach einem speziellen Stator-Rotor-Prinzip, bei welchem das Auftreten hoher Scherkräfte vermieden wird.

Gegenstand der vorliegenden Erfindung ist daher auch die Verwendung einer Mischvorrichtung mit einem Einlaß für das zu mischende Gemenge, einem Auslaß für das gemischte Gemenge, parallel zueinander angeordneten scheibenförmig ausgebildeten Stator-und Rotorelementen, auf der Oberfläche der Stator- bzw. der Rotorscheibe angebrachten Elemente, welche als Rührwerkzeuge und Strombrecher dienen und Durchtrittsöffnungen für den Durchtritt des zu mischenden Gemenges zur Durchführung des erfindungsgemäßen Verfahrens.

Vorzugsweise sind die auf der Oberfläche der Stator- bzw. der Rotorscheibe angebrachten Elemente zylinderförmige, senkrecht auf die Oberfläche der Stator- bzw. Rotorscheibe angeordnete Stifte. Durch die Zylinderform der Stifte kann das Auftreten lokaler hoher Scherkräfte zurückgehalten werden.

Solche Mischvorrichtungen sind aus dem Stand der Technik bekannt.

Das erfindungsgemäße Verfahren wird anhand des nachstehenden Ausführungsbeispieles und der Figuren näher erläutert.

Dabei zeigt Fig. 1 schematisch den allgemeinen Ablauf des erfindungsgemäßen Verfahrens, Fig.2 den Querschnitt der bevorzugt verwendeten Mischvorrichtung, Fig. 3a die Ansicht eines Rotors dieser Mischvorrichtung und Fig. 3b die Ansicht eines Stators dieser Mischvorrichtung.

Das kationische oder anionische Polymer (in Form einer Suspension oder Lösung) wird aus dem Vorratsbehälter (1) der aus dem Vorratsbehälter (2) kommenden Celluloselösung (Viskose) zugesetzt. Das entstandene Gemisch wird in die unmittelbar anschließende Mischvorrichtung (3) gepumpt. In der Mischvorrichtung wird der eintretende Strom der Mischkomponenten sofort in mehrere Teilströme aufgeteilt und somit homogen vermischt.

Die homogene Mischung wird zu einer Fällvorrichtung (4) transportiert, in der die Mischung mit einem Nichtlösungsmittel für die Cellulosepartikel in Kontakt gebracht wird und diese somit ausgefällt werden. Der für den Transport der Mischung in die Fällvorrichtung nötige Druck kann, falls erforderlich, mittels einer Zahnradpumpe (5) erzielt werden (abhängig von der Viskosität).

Eine Fibridform der ausgefällten Cellulosepartikel kann z.B. dadurch erreicht werden, daß zum Ausfällen der Viskose die Viskose durch eine Spinndüse in ein Fällbad extrudiert wird und die frisch extrudierten Filamente unmittelbar nach dem Austritt aus der Spinndüse vorzugsweise durch ein Rührwerk zu Fibriden zerkleinert werden.

Nach der Wäsche (6) werden die erhaltenen Cellulosepartikel auf einen Feuchtigkeitsgehalt von 75 Masse-% bis 90 Masse-% abgepreßt und können in die für den jeweiligen Einsatzzweck geeignete Form übergeführt werden.

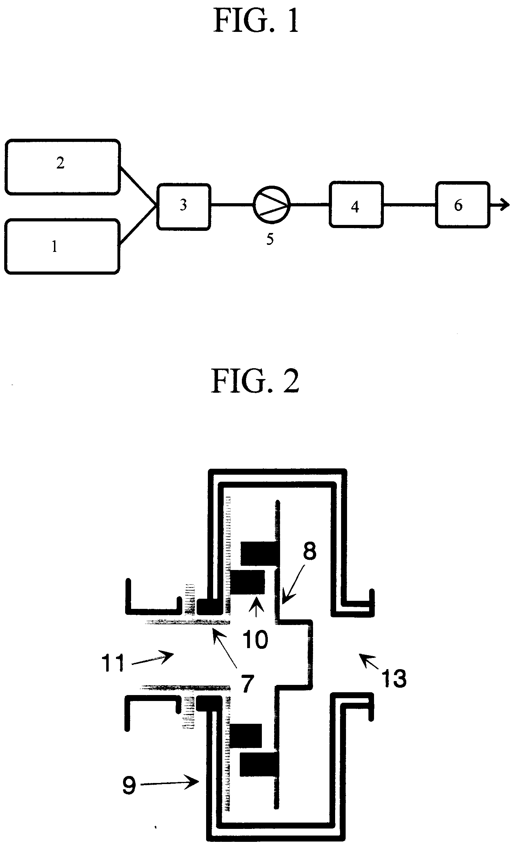

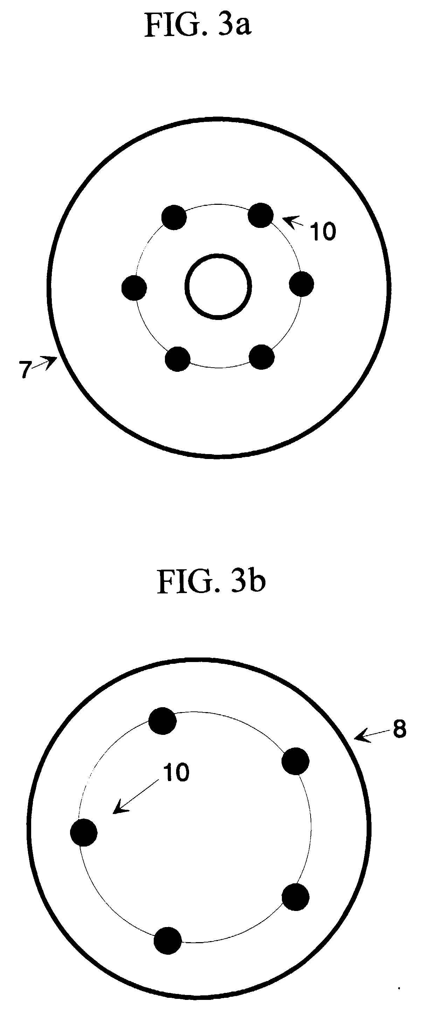

Eine besonders geeignete Mischvorrichtung ist in Fig. 2 und 3 gezeigt:

Diese Mischvorrichtung (3) besteht aus einem Stator (8) und einem Rotor (7), die sich in einem Gehäuse (9) befinden. Auf dem Stator und dem Rotor sind auf einem Umfangkreis senkrechte Stifte (10) aufgebracht. Diese können als Zylinderstifte ausgebildet sein. Der Radius des Umfangkreises, auf dem sich die Stifte des Rotors befinden, ist kleiner als der Radius des Umfangkreises der Stifte des Stators. Die Stifte des Stators dienen als Strombrecher.

Die Eintrittsöffnung für die Mischkomponenten wird durch eine Öffnung (11) in der Achse des Rotors gebildet. Zwischen dem Umfang des Stators und dem Gehäuse wird als Durchtrittsöffnung ein Spalt gebildet, durch welchen das gemischte Gemenge durchtreten kann. Das Gehäuse weist eine Austrittsöffnung (13) auf

Die Mischung tritt durch die axiale Eintrittsöffnung im Rotor ein. Der Rotor wird durch einen Motor (nicht dargestellt) angetrieben. Durch die Fliehkraft wird der Eintrittsstrom der Mischkomponenten durch den Zwischenraum der Stifte im Rotor in mehrere Teilströme aufgeteilt und durch die Stifte des Stators mehrfach gebrochen und somit homogen vermischt. Die Mischenergie, die über den Rotor eingebracht wird, wird somit auch gleichmäßig in der Mischung verteilt. Der bestehende Druck fördert die gebildete Mischung durch den Spalt zwischen Umfang des Stators und Gehäuse in den dahinterliegenen Raum und die Mischung tritt durch eine Öfffnung im Gehäuse aus. Die Förderung kann durch eine dahintergeschaltete Pumpe, z. B. eine Zahnradpumpe, unterstützt werden.

Die so erhaltenen Viskose/Polymermischungen sind homogen und eignen sich gut zur Weiterverarbeitung zu den erfindungsgemäßen Cellulosepartikeln.

### Ausführungsbeispiel:

Eine Standardviskose wurde mit einer 17%-igen wäßrigen Lösung von Poly-diallyl-dimethyl-ammoniumchlorid (Poly-DADMAC) in einer Menge von 20 Masse-% Poly-DADMAC bezogen auf Cellulose versetzt.

Das Gemenge wurde unmittelbar danach in einer Mischvorrichtung mit Rotor und Stator gemäß Fig. 2 und 3a bzw. 3b bei einer Drehzahl des Rotors von ca. 800 U/min vermischt. Dabei wurde eine Mischenergie von 8,2 kJ/kg Gemisch gleichmäßig eingetragen.

Die erhaltene homogene Spinnmasse wurde über eine Spinndüse (650 Spinnlöcher mit einem Lochdurchmesser von 500 µm) in ein in einem Behälter befindliches wäßriges Fällbad mit 20 g/l H₂SO₄ extrudiert und unmittelbar nach Austritt aus der Spinndüse im Fällbad mit einem Rührwerk (Fa. Fluid-Ekato, Type RD.35 12 A) verwirbelt, welches einen Abstand von 30 mm zur Spinndüse aufwies, sodaß Fibride mit einer Länge von ca. 5-10 mm erhalten wurden. Die erhaltene Suspension von fibridförmigen Cellulosepartikeln wurde am oberen Ende des Behälters abgezogen. Die Cellulosepartikel wurden zur Vervollständigung der Regeneration der Cellulose und zum Auswaschen mit Wasser gewaschen und aufeine Feuchte von ca. 80 Masse-% abgepreßt.

Die erhaltenen kationische Gruppen aufweisenden feuchten Cellulosepartikel wurden mittels einer Mahltrocknung gleichzeitig gemahlen und getrocknet. Die erhaltenen Produkte wiesen hervorragende Eigenschaften für zahlreiche Anwendungsgebiete auf.

## Patentansprüche

1. Verfahren zur Herstellung von kationische und/oder anionische Gruppen aufweisenden Cellulosepartikeln, enthaltend die Schritte:
• Versetzen und Vermischen einer Viskose mit einem kationischen und/oder anionischen Polymer
• Ausfällen der Viskose in einem oder mehreren wäßrigen Fäll- bzw. Regenerationsbädern
• Auswaschen der ausgefällten, regenerierten, kationische und/oder anionische Gruppen aufweisenden Cellulosepartikel,
dadurch gekennzeichnet,
daß das Vermischen der Viskose mit dem kationischen und/oder anionischen Polymer unter Einbringung einer Mischenergie von 4 kJ/kg bis 20 kJ/kg Gemisch, vorzugsweise von 8 kJ/kg bis 12 kJ/kg Gemisch durchgeführt wird.

2. Verfahren gemäß Anspruch 1, dadurch gekennzeichnet, daß die Mischenergie gleichmäßig in das Gemisch eingebracht wird.

3. Verfahren gemäß Anspruch 1 oder 2, dadurch gekennzeichnet, daß die Mischkomponenten in mehreren Teilströmen miteinander vermischt werden.

4. Verwendung einer Mischvorrichtung (3) mit einem Einlaß (11) für das zu mischende Gemenge, einem Auslaß (13) für das gemischte Gemenge, parallel zueinander angeordneten scheibenförmig ausgebildeten Rotor- und Statorelementen (7,8), auf der Oberfläche der Rotor- bzw. der Statorscheibe angebrachten Elementen (10), welche als Rührwerkzeuge und Strombrecher dienen und Durchtrittsöffnungen für den Durchtritt des zu mischenden Gemenges zur Durchführung des Verfahrens nach einem der Ansprüche 1 bis 3.

5. Verwendung einer Mischvorrichtung gemäß Anspruch 4, dadurch gekennzeichnet, daß die auf der Oberfläche der Rotor- bzw. der Statorscheibe (7,8) angebrachten Elemente (10) senkrecht zur Oberfläche der Rotor- bzw. der Statorscheibe angeordnete zylinderförmige Stifte sind.
